# EUROPEAN PATENT SPECIFICATION

(11) **EP 4 105 676 B1**
(45) Date of publication and mention of the grant of the patent: **21.05.2025**
(21) Application number: 21179801.2
(22) Date of filing: 16.06.2021
(51) Int. Cl.: G01S 7/02, B60D 1/00

(54) **DRIVER ASSISTANCE SYSTEM AND METHOD FOR OPERATING A DRIVER ASSISTANCE SYSTEM**
FAHRERASSISTENZSYSTEM UND VERFAHREN ZUM BETREIBEN EINES FAHRERASSISTENZSYSTEMS
SYSTÈME D'ASSISTANCE AU CONDUCTEUR ET PROCÉDÉ DE FONCTIONNEMENT D'UN SYSTÈME D'ASSISTANCE AU CONDUCTEUR

(43) Date of publication of application: 21.12.2022
(73) Proprietor: Robert Bosch GmbH, 70442 Stuttgart (DE)
(72) Inventor: LUKACS, Peter, 1103 Budapest (HU); ERDEI, Bence, 2220 Vecsés (HU)

(56) References cited:
- EP-A1- 3 567 402
- CN-A- 110 208 784
- DE-A1- 102019 211 005
- JP-A- 2001 334 966
- US-A1- 2011 022 282
- US-A1- 2019 129 429
- US-B1- 10 807 528

## Description

The present invention relates to a driver assistance system of a vehicle and a method for operating a driver assistance system of a vehicle.

### Prior Art

Modern vehicles come equipped with a plurality of different types of sensors to assist the driver or to provide automated control functions of the vehicle. Microwave corner radar sensors can provide information to determine the distance of objects in a surrounding of the vehicle or the velocities of the object. By measuring elevation and azimuth angles, radar sensors can even be used to determine locations of the object. Radar sensors are typically mounted on the front or rear corners of the vehicle. The working frequency of the radar sensors is about 77GHz.

An advanced driver assistance system (ADAS) can control functions of the vehicle based on the sensor data generated by the radar sensors. ADAS functions may comprise a highway assist function. This function supports (semi-)automated driving on highways, for example automated overtaking of another vehicle. Another application is blind spot detection. In this case, a radar sensor supported system provides information about vehicles near the car which is not visible for the driver.

Radar sensors are characterized by their field-of-view which relates to the angular range of the radar sensor where it can detect objects. It is important that there are no unwanted obstructions in the field of view of the radar sensors. Such obstructions may result in spatial region around the vehicle which the radar sensor can no longer see. Moreover, unwanted reflections on the obstructions can lead to unwanted signals and interferences. A driver assistance system that operates based on the obtained radar sensor data may no longer function properly if the radar sensor data is corrupt. Accordingly, obstructions should be avoided.

An obstruction can occur if the vehicle is towing a trailer. Herein, a trailer refers to an attachment to the vehicle which has no powertrain. The trailer will generally be located at least partially in the field of view of rear corner radar sensors. Therefore, the effective field of view for detecting objects in a surrounding of the vehicle is reduced. Further, as explained above, unwanted reflections and interferences may occur.

US 2019/0129429 A1 discloses a system for determining tractor-trailer angles and distances.

To extend the effective field of view of sensor systems of vehicles, US 10 086 870 B2 provides a trailer parking assistance system for a vehicle. The driver assistance system comprises a plurality of vehicle cameras and at least one trailer camera disposed at a trailer towed by the vehicle.

US 10 640 042 B2 relates to a vehicular surround vision system having vehicle cameras disposed at the vehicle and a trailer camera disposed at a rear of a trailer.

US 2019/016382 A relates to a vehicle system having a vehicle and a trailer system configured to autonomously maneuver rearward while following a guide. The vehicle includes a trailer reverse assist system with a follow-me system.

US 10 703 273 B2 relates to a method for generating an inferred bird's eye view associated with a tow vehicle attached to a trailer for trailer reverse assist.

### Disclosure of the Invention

The invention provides a driver assistance system of a vehicle and a method for operating a driver assistance system of a vehicle as recited in the independent claims.

Preferred embodiments are set out in the dependent claims.

According to a first aspect, the invention provides a driver assistance system for a vehicle according to appended claim 1.
output signal and/or to control at least one function of the vehicle at least in part based on the radar sensor data received from the at least one trailer radar device.

According to a second aspect, the invention provides a method for operating a driver assistance system of a vehicle according to appended claim 8.

### Advantages of the invention

The invention provides a driver assistance system for a vehicle with a trailer, the driver assistance system having enhanced functionality. To overcome possible obstructions of vehicle-mounted radar devices by the trailer, additional trailer radar devices are provided. The trailer radar devices can extend the field of view of a radar system of vehicle. The sensor data generated by the trailer radar device can be used to detect objects in blind spot regions around the trailer. In this way, also a region directly behind the trailer is accessible. The enlarged field of view of the driver assistance system leads to an improved detection of objects and can therefore enhance the safety of the driver assistance system.

According to a further embodiment, the driver assistance system further comprises a plurality of vehicle radar devices configured to be disposed at the vehicle and to generate further radar sensor data. The electronic control unit is coupled with the plurality of vehicle radar devices and is configured to receive the further radar sensor data from the plurality of vehicle radar devices. The electronic control unit is configured to generate the output signal and/or to control the at least one function of the vehicle at least in part based on the radar sensor data received from the at least one trailer radar device and the further radar sensor data received from the plurality of vehicle radar devices. The driver assistance system can therefore preferably comprise a surround view radar system which can essentially cover the entire 360 degree surrounding of the vehicle and the trailer. The enlarged field of view can increase the safety of the driver assistance system.

According to a further embodiment of the driver assistance system, the electronic control unit is configured to fuse the radar sensor data received from the at least one trailer radar device with the further radar sensor data received from the plurality of vehicle radar devices in at least an overlap region of a first field-of-view of the at least one trailer radar device and a second field-of-view of the plurality of vehicle radar devices. By using sensor fusion methods, the detection accuracy can be enhanced.

According to a further embodiment of the driver assistance system, the electronic control unit provides a highway assist function at least in part based on the radar sensor data received from the at least one trailer radar device. Based on the radar sensor data, the electronic control unit can detect objects in a surrounding of the vehicle and the trailer. The electronic control unit can provide functionality such as emergency braking, automated overtaking functions, lane changing functions and/or lane keeping functions.

According to a further embodiment of the driver assistance system, the electronic control unit provides a blind spot detection function at least in part based on the radar sensor data received from the at least one trailer radar device. Based on the radar sensor data, the electronic control unit detects objects in blind spot areas around the trailer which are not directly visible to the driver of the vehicle.

According to a further embodiment of the driver assistance system, the electronic control unit is configured to provide an automated driving function at least in part based on the radar sensor data received from the at least one trailer radar device. The automated driving function can take events in a surrounding of the trailer into account.

According to a further embodiment of the driver assistance system, the electronic control unit is configured to provide a vulnerable object detection function at least in part based on the radar sensor data received from the at least one trailer radar device. Vulnerable objects in a surrounding of the trailer can be detected. This embodiment is particularly useful if the vehicle with the trailer is maneuvering in a backwards direction. Persons or objects along the expected trajectory of the vehicle and the trailer can be detected. The trajectory can be adjusted, or a braking procedure can be initiated if a collision is detected. Therefore, the safety of persons behind the trailer can be improved.

According to a further embodiment of the driver assistance system, the electronic control unit is further configured to receive motion data of the vehicle, and to transform the radar sensor data obtained from the at least one trailer radar device into a vehicle coordinate system of the vehicle. The motion data of the vehicle can comprise at least one of a velocity, a trajectory or a steering wheel angle. Based on the motion data, the electronic control unit can determine the relative orientation of the vehicle with respect to the trailer. Based on the relative orientation of the vehicle with respect to the trailer, the electronic control unit computes transition functions to transform the radar sensor data from the coordinate system of the trailer radar sensor into the vehicle coordinate system of the vehicle. In addition or alternatively, sensor information regarding the relative angle orientation of the trailer with respect to the vehicle can be taken into account to compute the transformation of the radar sensor data into the vehicle coordinate system. According to a further embodiment of the driver assistance system, the electronic control unit is configured to determine a trailer angle of the trailer relative to the vehicle at least in part based on the radar sensor data received from the at least one trailer radar device. The trailing angle can be computed by comparing radar sensor data of the trailer radar device to further radar sensor data obtained by the vehicle radar devices. For example, the field of view of at least one vehicle radar sensor and at least one trailer radar sensor can overlap. Objects within the overlap are present in both the radar sensor data generated by the at least one trailer radar device and the further radar sensor data generated by the at least one vehicle radar device. By identifying the object, a registration process can be used to determine the trailer angle of the trailer relative to the vehicle. Based on the trailer angle, the radar sensor data can also be transformed into the vehicle coordinate system of the vehicle.

According to the invention, the electronic control unit is configured to determine oscillations of the trailer at least in part based on the radar sensor data received from the at least one trailer radar device. Oscillations of the trailer will result in oscillations of the objects determined based on the radar sensor data. By measuring these oscillations, installations of the trailer can be determined. For example, oscillation measurement can be based on doppler signals with regard to stationary objects, such as guardrails. If the oscillations exceed a predetermined threshold, a warning can be prompted to the driver of the vehicle to reduce speed, or an automated breaking maneuver can be initiated.

According to a further embodiment of the driver assistance system, the at least one trailer radar device is coupled to the electronic control unit via a CAN bus of the vehicle.

According to the invention, the at least one trailer radar device is a rear-view radar device. That is, the at least one trailer radar device has a field of view at least partially being directed rearward of the trailer.

According to a further embodiment of the driver assistance system, the electronic control unit provides clearance detection in case of turning or reversing directions. For example, in case of middle mounted axis trailers, the end of the trailer can sway out during turning or reversing. If an object gets too close, a warning may be output to the driver.

### Short description of the drawings

- Figure 1: shows a schematic block diagram of a vehicle with a trailer, comprising a driver assistance system according to an embodiment of the invention; and
- Figure 2: shows a flow diagram of a method of operating a driver assistance system for a vehicle according to an embodiment of the invention.

The numbering of process steps is for clarity and is generally not intended to imply any particular chronological order. In particular, several process steps can also be carried out simultaneously.

### Description of the embodiments

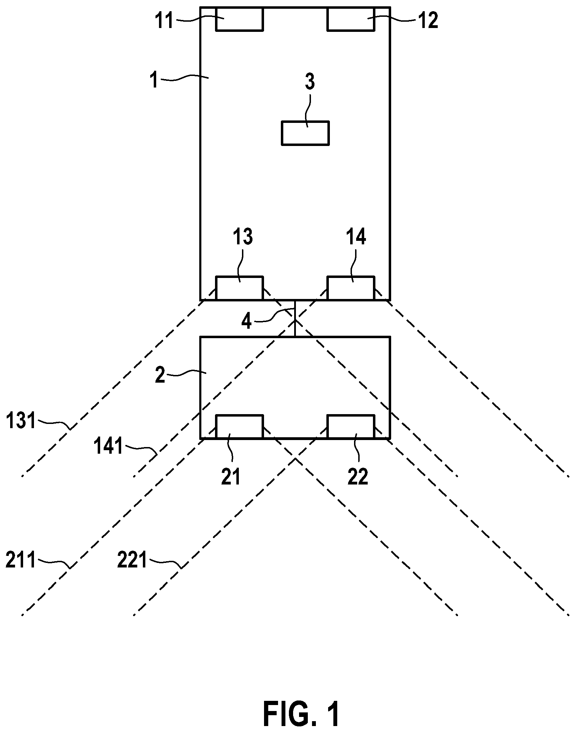

Figure 1 shows a schematic block diagram of a vehicle 1 with a trailer 2, comprising a driver assistance system.

The driver assistance system comprises rearward oriented trailer radar devices 21 and 22, each with a respective field of view 211, 221. The trailer radar devices 21 and 22 are disposed at the trailer 2 towed by the vehicle 1 and generate radar sensor data.

The driver assistance system further comprises front corner vehicle radar devices 11 and 12 as well as rear corner vehicle radar devices 13 and 14 disposed at the vehicle 1 which generate further radar sensor data. The trailer 2 obstructs a field of view 131 and 141 of the rear corner vehicle radar devices 13 and 14.

The driver assistance system further comprises an electronic control unit 3 which is coupled with the trailer radar devices 21, 22 and the vehicle radar devices 11 to 14, e.g. via a CAN bus. The electronic control unit 3 receives the radar sensor data from the trailer radar devices 21, 22, and the further radar sensor data from the vehicle radar devices 11 to 14.

The electronic control unit 3 can be configured to detect connection of the trailer to the vehicle 1. In this case, the electronic control unit 3 may disable the rear corner vehicle radar devices 13 and 14.

The electronic control unit 3 can further analyze the radar sensor data received by the trailer radar devices 21, 22 and the further radar sensor data received by the vehicle radar devices 11 to 14. The electronic control unit 3 may detect objects based on the radar sensor data and the further radar sensor data. The electronic control unit 3 may also use the radar sensor data with the further radar sensor data.

Based on the result of the analysis of the radar sensor data and the further radar sensor data, the electronic control unit 3 may generate an output signal. For example, the driver assistance system may further comprise a display arranged in the vehicle 1. The electronic control unit 3 may generate a display image on the display, showing objects detected based on the radar sensor data and the further radar sensor data. For example, the electronic control unit 3 may generate a surround view image of the vehicle 1 and the trailer 2.

Electronic control unit 3 may also generate a warning signal, in case a possible collision with an object is detected. For example, if the vehicle 1 with the trailer 2 is driving in a backwards direction, the electronic control unit 3 may detect objects behind the trailer 2. In case an object is located in the expected trajectory of the vehicle 1 and the trailer 2, the electronic control unit 3 may output the signal. The signal can be a visual signal, e.g. presented in a display or a dashboard of the vehicle 1. The signal can additionally or alternatively also be an acoustic or haptic signal.

The electronic control unit 3 may also control at least one function of the vehicle 1 at least in part based on the radar sensor data received from the at least one trailer radar device 21, 22 and the further radar sensor data received from the plurality of vehicle radar devices 11 to 14. For example, the electronic control unit 3 may provide emergency braking functions, lane keeping functions, parking assist functions, lane changing functions, or the like.

The electronic control unit 3 may also provide a blind spot detection function in a region behind or around the trailer 2.

The electronic control unit 3 may also determine a trailer angle of the trailer 2 relative to the vehicle 1 at least in part based on the radar sensor data received from the at least one trailer radar device 21, 22.

The electronic control unit 3 may further receive motion data of the vehicle 1, such as a velocity or orientation of the vehicle 1. The electronic controller 3 may transform the radar sensor data obtained from the at least one trailer radar device 21, 22 into a vehicle coordinate system of the vehicle. For transforming the radar sensor data, the electronic control unit 3 may also take the trailer angle of the trailer 2 into account.

Further, the electronic control unit 3 determines oscillations of the trailer 2 at least in part based on the radar sensor data received from the at least one trailer radar device 21, 22. The electronic controller 3 may detect doppler signals based on reflections from static objects to determine the oscillations of the trailer 2.

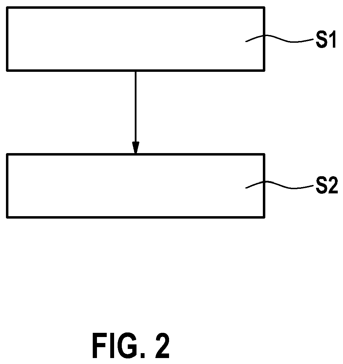

Figure 2 shows a flow diagram of a method of operating a driver assistance system for a vehicle 1. The vehicle 1 is towing a trailer 2. The vehicle 1 may comprise vehicle radar devices 11 to 14, such as illustrated in figure 1. Further, trailer radar devices 21, 22 are arranged at the trailer 2. The trailer radar devices 21, 22 are connected to a CAN bus of the vehicle 1 and can communicate with an electronic control unit 3 of the vehicle 1.

In a first method step S1, the trailer radar devices 21, 22 of the driver assistance system generate radar sensor data, and the vehicle radar devices 11 to 14 generate further radar sensor data.

In a second method step S2, an electronic control unit 3 of the driver assistance system analyzes the radar sensor data and the further radar sensor data. Based on the analysis, the electronic control unit 3 may detect objects, determines oscillations or may determine a trailer angle.

Based on the analysis, the electronic control unit 3 generates an output signal and/or controls at least one function of the vehicle 1 at least in part based on the generated radar sensor data.

## Claims

1. A driver assistance system for a vehicle (1), comprising:
at least one trailer radar device (21, 22) configured to be disposed at a trailer (2) towed by the vehicle (1) and to generate radar sensor data, wherein the at least one trailer radar device (21, 22) is a rear-view radar device; and
an electronic control unit (3) configured to be disposed in the vehicle (1) and to be coupled with the at least one trailer radar device (21, 22), and configured to receive the radar sensor data from the at least one trailer radar device (21, 22);
wherein the electronic control unit (3) is configured to generate an output signal and/or to control at least one function of the vehicle (1) at least in part based on the radar sensor data received from the at least one trailer radar device (21, 22);
**characterized in that** the electronic control unit (3) is configured to determine oscillations of the trailer (2) at least in part based on the radar sensor data received from the at least one trailer radar device (21, 22).

2. The driver assistance system according to claim 1, further comprising a plurality of vehicle radar devices (11-14) configured to be disposed at the vehicle (1) and to generate further radar sensor data;
wherein the electronic control unit (3) is coupled with the plurality of vehicle radar devices (11-14) and is configured to receive the further radar sensor data from the plurality of vehicle radar devices (11-14); and
wherein the electronic control unit (3) is configured to generate the output signal and/or to control the at least one function of the vehicle (1) at least in part based on the radar sensor data received from the at least one trailer radar device (21, 22) and the further radar sensor data received from the plurality of vehicle radar devices (11-14).

3. The driver assistance system according to claim 2, wherein the electronic control unit (3) is configured to fuse the radar sensor data received from the at least one trailer radar device (21, 22) with the further radar sensor data received from the plurality of vehicle radar devices (11-14) in at least an overlap region of a first field-of-view of the at least one trailer radar device (21, 22) and a second field-of-view of the plurality of vehicle radar devices (11-14).

4. The driver assistance system according to any of the preceding claims, wherein the electronic control unit (3) is configured to provide at least one of a blind spot detection function, an automated driving function and a vulnerable object detection function at least in part based on the radar sensor data received from the at least one trailer radar device (21, 22).

5. The driver assistance system according to any of the preceding claims, wherein the electronic control unit (3) is further configured to receive motion data of the vehicle (1), and to transform the radar sensor data obtained from the at least one trailer radar device (21, 22) into a vehicle coordinate system of the vehicle (1).

6. The driver assistance system according to any of the preceding claims, wherein the electronic control unit (3) is configured to determine a trailer angle of the trailer (2) relative to the vehicle (1) at least in part based on the radar sensor data received from the at least one trailer radar device (21, 22).

7. The driver assistance system according to any of the preceding claims, wherein the at least one trailer radar device (21, 22) is coupled to the electronic control unit (3) via a CAN bus of the vehicle (1).

8. A method for operating a driver assistance system of a vehicle (1), comprising the steps:
generating (S1) radar sensor data by at least one trailer radar device (21, 22) of the driver assistance system, the at least one trailer radar device (21, 22) being disposed at a trailer (2) towed by the vehicle (1), wherein the at least one trailer radar device (21, 22) is a rear-view radar device; and
generating (S2) an output signal and/or controlling at least one function of the vehicle (1) at least in part based on the generated radar sensor data, by an electronic control unit (3) of the driver assistance system, the electronic control unit (3) being disposed in the vehicle (1) and being coupled with the at least one trailer radar device (21, 22);
**characterized by** determining oscillations of the trailer (2) at least in part based on the radar sensor data received from the at least one trailer radar device (21, 22).

## Patentansprüche

1. Fahrerassistenzsystem für ein Fahrzeug (1), das Folgendes umfasst:
mindestens eine Anhängerradarvorrichtung (21, 22), die dazu konfiguriert ist, an einem Anhänger (2), der von dem Fahrzeug (1) gezogen wird, angeordnet zu sein und Radarsensordaten zu erzeugen, wobei die mindestens eine Anhängerradarvorrichtung (21, 22) eine Rückfahrradarvorrichtung ist; und
eine elektronische Steuereinheit (3), die dazu konfiguriert ist, in dem Fahrzeug (1) angeordnet zu sein und mit der mindestens einen Anhängerradarvorrichtung (21, 22) gekoppelt zu sein, und dazu konfiguriert ist, die Radarsensordaten von der mindestens einen Anhängerradarvorrichtung (21, 22) zu empfangen;
wobei die elektronische Steuereinheit (3) dazu konfiguriert ist, ein Ausgangssignal zu erzeugen und/oder mindestens eine Funktion des Fahrzeugs (1) zumindest teilweise auf Grundlage der Radarsensordaten, die von der mindestens einen Anhängerradarvorrichtung (21, 22) empfangen werden, zu steuern;
**dadurch gekennzeichnet, dass** die elektronische Steuereinheit (3) dazu konfiguriert ist, Schwingungen des Anhängers (2) zumindest teilweise auf Grundlage der Radarsensordaten, die von der mindestens einen Anhängerradarvorrichtung (21, 22) empfangen werden, zu bestimmen.

2. Fahrerassistenzsystem nach Anspruch 1, ferner umfassend eine Mehrzahl von Fahrzeugradarvorrichtungen (11-14), die dazu konfiguriert ist, an dem Fahrzeug (1) angeordnet zu sein und weitere Radarsensordaten zu erzeugen;
wobei die elektronische Steuereinheit (3) mit der Mehrzahl von Fahrzeugradarvorrichtungen (11-14) gekoppelt ist und dazu konfiguriert ist, die weiteren Radarsensordaten von der Mehrzahl von Fahrzeugradarvorrichtungen (11-14) zu empfangen; und
wobei die elektronische Steuereinheit (3) dazu konfiguriert ist, das Ausgangssignal zu erzeugen und/oder die mindestens eine Funktion des Fahrzeugs (1) zumindest teilweise auf Grundlage der Radarsensordaten, die von der mindestens einen Anhängerradarvorrichtung (21, 22) empfangen werden, und der weiteren Radarsensordaten, die von der Mehrzahl von Fahrzeugradarvorrichtungen (11-14) empfangen werden, zu steuern.

3. Fahrerassistenzsystem nach Anspruch 2, wobei die elektronische Steuereinheit (3) dazu konfiguriert ist, die Radarsensordaten, die von der mindestens einen Anhängerradarvorrichtung (21, 22) empfangen werden, mit den weiteren Radarsensordaten, die von der Mehrzahl von Fahrzeugradarvorrichtungen (11-14) empfangen werden, in mindestens einem Überlappungsbereich eines ersten Sichtfeldes der mindestens einen Anhängerradarvorrichtung (21, 22) und eines zweiten Sichtfeldes der Mehrzahl von Fahrzeugradarvorrichtungen (11-14) zu vereinigen.

4. Fahrerassistenzsystem nach einem der vorhergehenden Ansprüche, wobei die elektronische Steuereinheit (3) dazu konfiguriert ist, mindestens eine von einer Totwinkeldetektionsfunktion, einer automatisierten Fahrfunktion und einer Funktion zur Detektion von gefährdeten Objekten zumindest teilweise auf Grundlage der Radarsensordaten, die von der mindestens einen Anhängerradarvorrichtung (21, 22) empfangen werden, bereitzustellen.

5. Fahrerassistenzsystem nach einem der vorhergehenden Ansprüche, wobei die elektronische Steuereinheit (3) ferner dazu konfiguriert ist, Bewegungsdaten des Fahrzeugs (1) zu empfangen und die Radarsensordaten, die von der mindestens einen Anhängerradarvorrichtung (21, 22) empfangen werden, in ein Fahrzeugkoordinatensystem des Fahrzeugs (1) umzuwandeln.

6. Fahrerassistenzsystem nach einem der vorhergehenden Ansprüche, wobei die elektronische Steuereinheit (3) dazu konfiguriert ist, einen Anhängerwinkel des Anhängers (2) relativ zu dem Fahrzeug (1) zumindest teilweise auf Grundlage der Radarsensordaten, die von der mindestens einen Anhängerradarvorrichtung (21, 22) empfangen werden, zu bestimmen.

7. Fahrerassistenzsystem nach einem der vorhergehenden Ansprüche, wobei die mindestens eine Anhängerradarvorrichtung (21, 22) über einen CAN-Bus des Fahrzeugs (1) an die elektronische Steuereinheit (3) gekoppelt ist.

8. Verfahren zum Betreiben eines Fahrerassistenzsystems eines Fahrzeugs (1), das die folgenden Schritte umfasst:
Erzeugen (S1) von Radarsensordaten durch mindestens eine Anhängerradarvorrichtung (21, 22) des Fahrerassistenzsystems, wobei die mindestens eine Anhängerradarvorrichtung (21, 22) an einem Anhänger (2), der von dem Fahrzeug (1) gezogen wird, angeordnet ist, wobei die mindestens eine Anhängerradarvorrichtung (21, 22) eine Rückfahrradarvorrichtung ist; und
Erzeugen (S2) eines Ausgangssignals und/oder Steuern von mindestens einer Funktion des Fahrzeugs (1) zumindest teilweise auf Grundlage der erzeugten Radarsensordaten durch eine elektronische Steuereinheit (3) des Fahrerassistenzsystems, wobei die elektronische Steuereinheit (3) in dem Fahrzeug (1) angeordnet und mit der mindestens einen Anhängerradarvorrichtung (21, 22) gekoppelt ist;
**gekennzeichnet durch** Bestimmen von Schwingungen des Anhängers (2) zumindest teilweise auf Grundlage der Radarsensordaten, die von der mindestens einen Anhängerradarvorrichtung (21, 22) empfangen werden.

## Revendications

1. Système d'assistance au conducteur pour un véhicule (1), comprenant :
au moins un dispositif radar de remorque (21, 22) configuré pour être disposé sur une remorque (2) tractée par le véhicule (1) et pour générer des données de capteur radar, où l'au moins un dispositif radar de remorque (21, 22) est un dispositif radar de recul ; et
une unité de commande électronique (3) configurée pour être disposée dans le véhicule (1) et pour être couplée avec l'au moins un dispositif radar de remorque (21, 22), et configurée pour recevoir les données du capteur radar provenant de l'au moins un dispositif radar de remorque (21, 22) ;
où l'unité de commande électronique (3) est configurée pour générer un signal de sortie et/ou pour contrôler au moins une fonction du véhicule (1) au moins en partie sur la base des données du capteur radar reçues de l'au moins un dispositif radar de remorque (21, 22) ;
**caractérisé en ce que** l'unité de commande électronique (3) est configurée pour déterminer les oscillations de la remorque (2) au moins en partie sur la base des données du capteur radar reçues de l'au moins un dispositif radar de remorque (21, 22).

2. Système d'assistance au conducteur selon la revendication 1, comprenant en outre une pluralité de dispositifs radar de véhicule (11-14) configurés pour être disposés sur le véhicule (1) et pour générer d'autres données de capteur radar ;
dans lequel l'unité de commande électronique (3) est couplée à la pluralité de dispositifs radar de véhicule (11-14) et est configurée pour recevoir les données supplémentaires du capteur radar en provenance de la pluralité de dispositifs radar de véhicule (11-14) ; et
dans lequel l'unité de commande électronique (3) est configurée pour générer le signal de sortie et/ou pour contrôler l'au moins une fonction du véhicule (1) au moins en partie sur la base des données de capteur radar reçues de l'au moins un dispositif radar de remorque (21, 22) et des autres données de capteur radar reçues de la pluralité de dispositifs radar de véhicule (11-14).

3. Système d'assistance au conducteur selon la revendication 2, dans lequel l'unité de commande électronique (3) est configurée pour fusionner les données de capteur radar reçues de l'au moins un dispositif radar de remorque (21, 22) avec les autres données de capteur radar reçues de la pluralité de dispositifs radar de véhicule (11-14) dans au moins une région de chevauchement d'un premier champ de vision de l'au moins un dispositif radar de remorque (21, 22) et d'un deuxième champ de vision de la pluralité de dispositifs radar de véhicule (11-14).

4. Système d'assistance au conducteur selon l'une quelconque des revendications précédentes, dans lequel l'unité de commande électronique (3) est configurée pour fournir au moins l'une d'une fonction de détection d'angle mort, d'une fonction de conduite automatisée et d'une fonction de détection d'objet vulnérable, au moins en partie sur la base des données de capteur radar reçues de l'au moins un dispositif radar de remorque (21, 22).

5. Système d'assistance au conducteur selon l'une quelconque des revendications précédentes, dans lequel l'unité de commande électronique (3) est en outre configurée pour recevoir des données de mouvement du véhicule (1), et pour transformer les données du capteur radar obtenues à partir de l'au moins un dispositif radar de remorque (21, 22) en un système de coordonnées du véhicule (1).

6. Système d'assistance au conducteur selon l'une quelconque des revendications précédentes, dans lequel l'unité de commande électronique (3) est configurée pour déterminer un angle de remorque de la remorque (2) par rapport au véhicule (1) au moins en partie sur la base des données de capteur radar reçues de l'au moins un dispositif radar de remorque (21, 22).

7. Système d'assistance au conducteur selon l'une quelconque des revendications précédentes, dans lequel l'au moins un dispositif radar de remorque (21, 22) est couplé à l'unité de commande électronique (3) par l'intermédiaire d'un bus CAN du véhicule (1).

8. Procédé de mise en œuvre d'un système d'assistance au conducteur d'un véhicule (1), le procédé comprenant les étapes suivantes :
générer (S1) des données de capteur radar par au moins un dispositif radar de remorque (21, 22) du système d'assistance au conducteur, l'au moins un dispositif radar de remorque (21, 22) étant disposé sur une remorque (2) tractée par le véhicule (1), où l'au moins un dispositif radar de remorque (21, 22) est un dispositif radar de recul ; et
générer (S2) un signal de sortie et/ou commander au moins une fonction du véhicule (1) au moins en partie sur la base des données de capteur radar générées, par une unité de commande électronique (3) du système d'assistance au conducteur, l'unité de commande électronique (3) étant disposée dans le véhicule (1) et étant couplée avec l'au moins un dispositif radar de remorque (21, 22) ;
**caractérisé par** la détermination des oscillations de la remorque (2) au moins en partie sur la base des données de capteur radar reçues de l'au moins un dispositif radar de remorque (21, 22).
